# EUROPÄISCHE PATENTSCHRIFT

(11) **EP 2 481 124 B1**
(45) Veröffentlichungstag und Bekanntmachung des Hinweises auf die Patenterteilung: **21.05.2014**
(21) Anmeldenummer: 10755187.1
(22) Anmeldetag: 22.09.2010
(51) Int. Cl.: H01M 2/34, H01M 2/20, H01M 10/613, H01M 10/653, H01M 10/6556, H01M 2/10, H01M 10/625, H01M 10/6553

(54) **ISOLATIONSVORRICHTUNG UND VERFAHREN ZUR HERSTELLUNG EINER ISOLATIONSVORRICHTUNG**
INSULATING DEVICE AND METHOD FOR PRODUCING AN INSULATING DEVICE
DISPOSITIF D'ISOLATION ET PROCÉDÉ DE FABRICATION D'UN DISPOSITIF D'ISOLATION

(30) Priorität: 22.09.2009 DE 102009042270
(43) Veröffentlichungstag der Anmeldung: 01.08.2012
(73) Patentinhaber: Behr GmbH & Co. KG, 70469 Stuttgart (DE)
(72) Erfinder: KOHLBERGER, Markus, 70174 Stuttgart (DE); MOSER, Michael, 73492 Rainau (DE)
(74) Vertreter: Grauel, Andreas
(86) Internationale Anmeldenummer: PCT/EP2010/063965
(87) Internationale Veröffentlichungsnummer: WO 2011/036172

(56) Entgegenhaltungen:
- DE-A1-102007 010 745
- DE-A1-102007 031 674
- DE-A1-102007 063 178
- JP-A- 2001 076 696
- JP-A- 2005 317 456
- US-A1- 2005 026 014

## Beschreibung

Die vorlegende Erfindung bezieht sich auf eine Isolationsvorrichtung für eine elektrochemische Energiespeichereinheit gemäß Anspruch 1 sowie auf ein Verfahren zur Herstellung einer Isolationsvorrichtung für eine elektrochemische Energiespeichereinheit gemäß Anspruch 11.

Bei Batterien für Hybrid- und Elektrofahrzeuge wird eine große Anzahl von galvanischen Zellen in Serie verschaltet um eine höhere Spannung zu erzielen. Solche Batterien können als elektrochemische Energiespeicherzellen bezeichnet werden, wobei auch Akkumulatoren unter dieser Bezeichnung verstanden werden können, die ebenfalls in Hybrid- oder Elektrofahrzeugen Einsatz finden. Aufgrund der hohen Ströme, die dann durch derartige elektrochemische Energiespeicherzellen fließen und der dadurch entstehende hohen Wärme, ist außerdem eine Kühlung der elektrochemischen Energiespeicherzellen notwendig.

Im Stand der Technik bestehen für derartige Probleme diverse Kühlmöglichkeiten wie beispielsweise eine Luftkühlung, eine Flüssigkühlung, eine direkt Kühlung über eine Klimaanlage (AC = air conditioning = Klimaanlage) und möglicherweise auch Kombinationen daraus.

Thermisch angebunden werden kann diese Kühlung über Flächen der elektrochemischen Energiespeicher- Zellen oder über die thermischen Ableiter, wie es beispielsweise in den Druckschriften WO 2009/006998 A1, DE 10 2007 063 178 A1, DE 10 2007 010 745 A1 oder der EP 2 026 387 A1 offenbart ist. Ferner ist in der Fig. 1 eine prinzipielle Vorgehensweise zur Anbindung einer Kühlplatte an eine Kontaktschiene gemäß dem Stand der Technik wiedergegeben. Dabei werden Nietzapfen 1 als Halteelement durch eine Öffnung der Kühlplatte 2 und zumindest eine Kontaktschiene 4 geführt, wobei die Kuhlplatte 2 gegenüber den Kontaktschienen 4 durch eine Wärmeleitfolie 3 elektrisch isoliert ist

Problematisch bei den Lösungen gemäß dem Stand der Technik ist jedoch, dass die Luftkühlung viel Bauraum benotigt und eine solche Luftkühlung ferner auch hinsichtlich möglicher Verschmutzungen und einer thermischen Abführleistung Einschränkungen aufweist. Bei einer Anbindung der Zellen über die Flächen der Kühlplatte verschlechtern thermische Widerstände den Wärmeübergang und damit die Wärmeabfuhrrate. Eine Ableiterkühlung ermöglicht es, - die Wärme direkt aus der Zelle abzuleiten, bei einem solchen Kühlungsansatz sollte jedoch eine sichere elektrische Isolation gewährleistet werden. Gleichzeitig sollte dre thermische Anbindung möglichst gut sein, d h ein möglichst geringer thermischer Widerstand zwischen der Kontaktschiene 4 und der Kühlplatte 2 sollte vorliegen

Es ist daher die Aufgabe der vorliegenden Erfindung eine verbesserte Isolationsvornchtung für eine elektrochemische Energiespeichereinheit sowie ein verbessertes Verfahren zur Herstellung einer Isolationsvorrichtung für eine elektrochemische Energiespeichereinheit zu schaffen.

Diese Aufgabe wird durch eine Isolätionsvorrichtung gemäß Anspruch 1 sowie ein Verfahren gemaß Anspruch 11 gelost.

Die vorliegenden Erfindung schafft eine Isolationsvorrichtung für eine elektrochemische Energiespeichereinheit, wobei die Isolationseinheit folgende Merkmale aufweist:
- eine Kühlplatte, die zur thermischen Kontaktierung mit der elektrochemischen Energiespeichereinheit ausgebildet ist, wobei die Kühlplatte zumindest eine Öffnung aufweist,
- eine Kontaktschiene, die zur Ableitung von Wärme ausgebildet ist,
- ein Halteelement zur Fixierung einer Anordnung zwischen der Kühlplatte und der Kontaktschiene, wobei das Halteelement einen Schaft aufweist, der sich durch die Öffnung der Kuhlplatte erstreckt und wobei durch einen Abstand zwischen einer Wand der Öffnung und dem Schaft einer erster Zwischenraum definiert ist und/oder durch einen Abstand zwischen einer Kante der Kontaktschiene und dem Schaft ein zweiter Zwischenraum definiert ist; und
- ein Verbindungselement mit einer Oberfläche, die ein elektrisch isolierendes Material aufweist, wobei das Verbindungselement zwischen einer Hauptfläche der Kühlplatte und einer Fläche der Kontaktschiene angeordnet ist und ferner einen Teilbereich aufweist, der in den ersten und/oder den zweiten Zwischenraum hineinragt.

Ferner schafft die vorliegende Erfindung ein Verfahren zur Herstellung einer Isolationsvorrichtung für eine elektrochemische Energiespeichereinheit, wobei das Verfahren die folgenden Schritte umfasst:
- Bereitstellen einer Kühlplatte, die zur thermischen Kontaktierung mit der elektrochemischen Energiespeichereinheit ausgebildet ist, wobei die Kühlplatte zumindest eine Öffnung aufweist;
- Bereitstellen einer Kontaktschiene, die zur Ableitung von Warme ausgebildet ist;
- Anordnen eines Verbindungselementes mit einer Oberfläche, die ein elektrisch isolierendes Material aufweist, zwischen einer Hauptoberfläche der Kühlplatte und einer Flache der Kontaktschiene, derart, dass ein Teilbereich des Verbindungselementes in die Öffnung der Kühlplatte ragt und/oder eine Kante der Kontaktschiene seitlich abdeckt, und
- Anbringen eines Halteelementes zur Fixierung einer Anordnung zwischen der Kuhlplatte und der Kontaktschiene, wobei das Halteelement einen Schaft aufweist, der beim Anbringen durch die Öffnung der Kühlplatte gesteckt wird, so dass der Teilbereich des Verbindungselementes zwischen dem Schaft und einer Wand der Öffnung und/oder zwischen der Kante der Kontaktschiene und dem Schaft angeordnet wird.

Die vorliegende Erfindung basiert auf der Erkenntnis, dass durch das Vorsehen eines Teilbereichs eines elektrisch isolierenden Verbindungselements in einen Zwischenraum zwischen einem Schaft eines Halteelementes und einer Wand einer Öffnung in einer Kühlplatte oder zwischen dem Schaft des Halteelements und der Kante der Kontaktschiene eine deutliche Vergrößerung oder Verlänger rung eines Wegs von möglichen Kriechströmen von der Kühlplatte zur Kontakt= schiene erreicht wird

Durch eine solche Verlängerung eines elektrischen Wegs von möglichen Kriechströmen kann eine Verbesserung der elektrischen Isolation zwischen der Kühlplatte und der Kontaktschiene erreicht werden. Dabei kann gemäß einer ersten Ausführungsform der Erfindung der entsprechende Teilbereich nur in den Zwischenraum zwischen dem Schaft des Halteelements und einer Wand in der Öffnung der Kühlplatte hineinragen. In einer zweiten Ausführungsform der Erfindung kann der Teilbereich des Verbindungselements nur in einem Zwischenraum zwischen dem Schaft des Halteelements und der Kante der Kontaktschiene hineinragen. In einer dritten Ausführungsform der Erfindung kann dagegen der Teilbereich des Verbindungselements sowohl in den Zwischenraum zwischen dem Schaft des Halteelements und der Wand der Öffnung als auch in den Zwischenraum zwischen der Kante der Kontaktschiene und dem Schaft des Halteelements hineinragen.

Das Verbindungselement, das vorzugsweise aus elektrisch isolierendem Material gefertigt sein sollte oder zumindest an der Oberfläche ein elektrisch isolierendes Material aufweisen sollte, kann damit auch als isoherendes Element verstanden werden Insbesondere der Teilbereich des Verbindungselementes, der in die entsprechenden Zwischenräume zwischen der Wand der Öffnung oder der Kante der Kontaktschiene und dem Schaft hineinragt, sollte dabei eine Oberfläche aus einem elektrisch isolierenden Material haben, um einen moglichst hohen elektrischen Widerstand gegen Kriechströme auf seiner Oberfläche zu haben. Durch das Vorsehen des Halteelementes kann ferner eine sichere Fixierung der Kontaktschiene mit der Kühlplatte sichergestellt werden.

Erfindungsgemäß kann die Kontaktschiene ein separates Element sein. Alternativ ist es jedoch auch möglich, dass die Ableiter der elektrochemischen Energiespeichereinheit die Kontaktschiene ausbilden

Die vorliegende Erfindung bietet den Vorteil, dass durch einfache konstruktive Maßnahmen eme signifikante Verlängerung eines Weges von möglichen Kriechsfrömen zwischen der Kühlplatte und der Kontaktschiene erreicht werden kann. Dabei kann ferner eine kompakte Bauform der Isolationsvorrichtung sihergestellt werden, so dass auch eine hohe elektrische Isolation in einem räumlichen Bereich mit geringer Ausdehnung sichergestellt Werden kann

In einer günstigen Ausführungsform der Erfindung kann das Verbindungselement ausgebildet sein, um im Zusammenwirken mit dem Schaft die Öffnung der Kühlplatte bündig zu verschließen. Eine derartige Ausführungsform der vorliegenden Erfindung bietet den Vorteil, dass eine zu schaffende Verlängerung eines Weges von möglichen Knechströmen maximal wird, wobei zugleich das bündige Verschließen der Öffnung der Kühlplatte an zwei sich gegenüberliegenden Hauptoberflächen möglich wird Dies reduziert eine mögliche Verschmutzungsneigung im Bereich der Öffnung, da keine Vertiefungen in diesem Bereich entstehen, in die sich eventuell leitfähige Partikel absetzen können, die wieder eine Verschlechterung der elektrischen Isolation bewirken würden.

Auch kann in einer weiteren Ausführungsform der Erfindung das Verbindungselement durch eine Wärmeleitfolie oder ein Silikonformteil gebildet sein. Eine derartige Ausführungsform der vorliegenden Erfindung bietet den Vorteil einer leichten Herstellungsmöglichkeit, wödurch sich Herstellungskosten reduzieren lassen

Ferner ist es auch günstig, wenn das Verbindungselement ein mit Bornitrid oder Aluminiumoxid gefülltes Element aus Polyurethan oder Silikon umfasst. Eine derartige Ausführungsform der vorliegenden Erfindung bietet ein sehr gutes elektrisches Isolationsverhalten und ermöglicht zugleich jedoch auch eine hohe Wärmeubertragungsfähigkeit des Verbindungselements.

Gemäß einer besonderen Ausführungsform der Erfindung kann das Verbindungselement eine Wärmeleitfolie und zumindest ein in die Wärmeleitfolie eingestecktes Isolationselement aufweisen, das in den ersten und/oder zweiten Zwischenraum hineinragt, wobei das Isolationselement durch eine Kunststoffbuchse, ein Silikon- oder Polyetherpolyurethan-Rundelement oder eine Silikon- oder Polyetherpolyurethan-Rundscheibe gebildet ist, Eine derartige Ausführungsform der vorliegenden Erfindung ermöglicht ebenfalls eine sehr einfache und damit kostengünstige Herstellungsmöglichkeit für das Verbindungselement, wobei zugleich durch das Isolationselement der elektrische gut isolierende Teilbereich ausgebildet werden kann, der den ersten und/oder zweiten Zwischenraum hineinragt Durch den technisch sehr einfachen Zusammenbau eines solchen Verbindungselement aus der Wärmeleitfolie und dem Isolationselement lässt sich somit eine sehr kostengünstige Isolationsvorrichtung herstellen.

In einer weiteren Ausführungsform der Erfindung kann das Isolationselement einen Isolationsschaft aufweisen, der sich entlang des Schaftes erstreckt, wobei der Isolationsschaft eine Form aufweist, die sich ausgebend von einer Hauptoberfläche der Kühlplatte mit zunehmender (Eindring-) Tiefe in der Öffnung der Kuhlplatte verjüngt. Eine derartige Ausführungsform der vorliegenden Erfindung bietet den Vorteil einer sehr einfachen Montagemöglichkeit beim Zusammenbau der Isolationsvorrichtung aus der Kühlplatte, der Kontaktschiene und dem dazwischen anzuordnenden Verbindungselement.

Ferner kann auch in einer anderen Ausführungsform der Erfindung das Verbindungselement eine laminierte Wärmeleitfolie umfassen, die zumindest zwei unterschiedliche Folienlagen aufweist, wobei zumindest eine der Folienlagen in den ersten und/oder zweiten Zwischenraum hineinragt. Eine derartige Ausführungsform der vorliegenden Erfindung bietet den Vorteil eines einfachen herzustellenden Verbindungselementes aus der lammierten Wärmeleitfolie, bei denen sich eine der Folienlagen beim Zusammenbau der Isolationsvorrichtung sehr einfach in den ersten und/oder zweiten Zwischenraum hinein drücken lässt. Auf diese Weise kann sehr einfach und kostengünstig das Verbindungselements mit dem genannten Teilbereich in den ersten und oder zweiten Zwischenraum ausgebildet werden.

Um sicherzustellen, dass eine Folienlage in den Zwischenraum zwischen der Wand der Öffnung oder der Kante der Kontaktschiene und dem Schaft des Halteelementes gedrückt wird kann, gemäß einer weiteren Ausführungsform der Erfindung die erste Lage eine Folienöffnung mit einem ersten Durchmesser und die zweite Lage eine Folienöffnung mit einem vom ersten Durchmesser unterschiedlichen zweiten Durchmesser aufweisen, wobei der Schaft sich durch die erste und zweite Folienöffnung erstreckt. Hierdurch wird die Folienlage mit der kleineren Öffnung beim Einstecken des Halteelementes in einen Zwischenraum zwischen des Wand der Öffnung und dem Schaft oder zwischen der Kante der Kontaktschiene und dem Schaft gedrückt, insbesondere wenn die kleinere Öffnung eine Durchmesser aufweist, der kleiner als ein Querschnitt des Schaftes ist.

Um eine möglichst gute Wärmeübertragung zwischen der Kontaktschiene und der Kuhlplatte zu erreichen, sollte eine große Auflagefläche zwischen der Kontaktschiene und dem Verbindungselement sowie zwischen dem Verbindungselement und der Kuhlplatte erreicht werden. Dies kann dadurch vorteilhaft erreichet werden, dass das Verbindungselement eine laminierte Wärmeleitfolie umfasst, die zumindest zwei unterschiedliche Folienlagen aufweist, wobei eine erste der beiden Folienlagen eine erste Öffnung mit einem kleineren Durchmesser aufweist und die zweite der beiden Folienlagen eine Öffnung mit einem größeren Durchmesser aufweist, und wobei das Isolationselement durch die erste und zweite Folienöffnung durchgesteckt ist und ein Isolationselementkopf die großere Folienöffnung ausfüllt und bündig mit einer Hauptoberfläche der Wärmeleitfolie abschießt.

Auch kann gemäß einer weiteren Ausführungsform der Erfindung die Kontaktschiene zumindest eine Öffnung aufweisen, durch die der Schaft des Halteelementes ragt, wobei die eine Kante der Kontaktschiene, die eine Begrenzung des zweiten Zwischenraums bildet, eine Kante der Öffnung der Kontaktschiene darstellt. Eine derartige Ausführungsform der vorliegenden Erfindung bietet vorteilhaft die Möglichkeit eine stabile und belastbare Fixierung zwischen der Kontaktschiene und der Kühlplatte sicherzustellen und zugleich eine hohe elektrische Isolation zwischen der Kontaktschiene und der Kühlplatte zu ermöglichen

Um möglichst einen Arbeitsschritt zu umgehen, in dem eine Wärmeleitplatte oder allgemein das Verbindungselement in eine Form gegossen werden muss, die nachfolgen aushärten und zwischen die Kontaktschiene und die Kühlplatte eingepasst werden musste, kann in einer besonderen Ausführungsform der Erfindung im Schritt des Bereitstellens der Kühlplatte eine Hauptoberfläche der Kühlplatte mit einem flüssigen Material beschichtet werden und ferner die mit dem flüssigen Material beschichtete Kuhlplatte erhitzt werden, um das Verbindungselement herzustellen. Dabei kann eine Wand einer Öffnung in der Kühlplatte ebenfalls mit der Vergussmasse beschichtet werden so dass auch der vorstehend genannte Teilbereich des Verbindungselementes im Schritt des Bereitstellens der Kuhlplatte ausgebildet werden kann.

Eine besonders gute elektrische Isolierfähigkeit bei guter Wärmeleitfähigkeit der Isolationsvorrichtung wird erhalten, wenn im Schritt des, Bereitstellens der Kühlplatte eine Hauptoberfläche mit einer keramisch gefullten Silikon-Vergussmasse beschichtet wird.

Vorteilhafte Ausführungsbeispiele der vorliegenden Erfindung werden nachfolgend Bezug nehmend auf die beiliegenden Zeichnungen naher erläutert Es zeigen:
- Fig. 1: eine Querschnittsdarstellung einer Isolationsvorrichtung gemäß dem Stand der Technik;
- Fig. 2: eine Querschnittsdarstellung einer Isolationsvorrichtung gemäß einem Ausführungsbeispiel der vorliegenden Erfindung:
- Fig. 3: eine Querschnittsdarstellung einer Isolationsvorrichtung gemäß einem weiteten Ausführungsbeispiel der vorliegenden Erfindung;
- Fig. 4: eine Querschnittsdarstellung einer Isolationsvorrichtung gemäß einem weiteren Ausführungsbeispiel der vorliegenden Erfindung;
- Fig. 5A: eine Querschnittsdarstellung einer Isolationsvorrichtung gemäß einem weiteren Ausführungsbeispiel der vorliegenden Erfindung;
- Fig. 5B: eine Querschnittsdarstellung einer Isolationsvorrichtung gemäß einem weiteren Ausführungsbeispiel der vorliegenden Erfindung, wobei nun elektrochemische Energiespeicherelemente thermisch mit mindestens einer Kontaktschiene verbunden sind; und
- Fig. 6: ein Ablaufdiagramm eines Ausführungsbeispiels der vorliegenden Erfindung als Verfahren.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird Die beschriebenen Ausführungsbeispiele sind nur beispielhaft gewahlt und können miteinander kombiniert werden Umfasst ein Ausführungsbeispiel eine "und/oder" Verknüpfung zwischen einem ersten Merkmal/Schritt und einem zweites Merkmal/Schritt, so kann dies so gelesen werden, dass das Ausführungsbeispiel gemäß einer Ausführungsform sowohl das erste Merkmal / den ersten Schritt als auch das zweite Merkmal/den zweiten Schritt und gemäß einer weiteren Ausführungsform entweder nur das erste Merkmal/Schritt oder nur das zweite Merkmal /Schritt aufweist

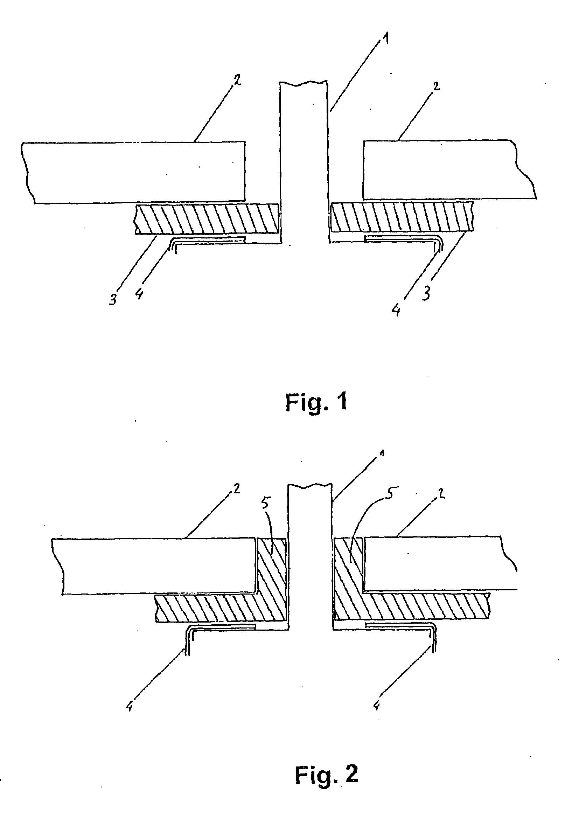

Fig 2 zeigt eine Querschnittsdarstellung einer Isolationsvorrichtung gemäß einem Ausführungsbeispiel der vorliegenden Erfindung. Gegenüber der Darstellung aus Fig 1 ist nun ersichtlich, dass gemäß einem ersten Ausführungsbeispiel der Erfindung das Verbindungselement 3, das hier als Wärmeleitfolie ausgebildet ist, einen Teilbereich 5 aufweist, der in die Öffnung der Kühlplatte zwischen einem Schaft des Halteelementes (d.h. des Nietzapfens 1) hineinragt Die Wärmeleitfolie beziehungsweise ein Silikonformteil 3 als Verbindungselement wird damit so ausgeformt, dass sie die Kante(n) der Durchführungsbohrung (d.h der Öffnung) in der Kuhlplatte 2 für den Nietzapfen 1 als Halteelement in der Kühlplatte 2 umschließt. Die Oberfläche des Teilbereiches 5 des Verbindungselementes 3 sollte dabei aus einem elektrisch isolierenden Material bestehen. Auf diese Weise kann eine Verlängerung des Weges von möglicherweise auftretenden Kriechströmen zwischen der Kühlplatte 2 und der Kontaktschiene 4 gegenüber Ansätzen entsprechend dem Stand der Technik erreicht werden Im Stand der Technik (entsprechend der Fig. 1) könnte nämlich ein Kriechstrom von einer unteren Ecke der Kühlplatte um die Kanten der Wärmeleitfolie 3 im Bereich der Öffnung der Wärmeleitfolie 3 am Nietzapfen 1 herum zur Kontaktschiene 4 über eine kurze Weg verlaufen Wenn jedoch das Verbindungselement gemäß Fig. 2 einen Teilbereich 5 aufweist, der in den Zwischenraum zwischen einer Wand der Öffnung der Kühlplatte 2 und dem Schaft 1 des Halteelementes hineinragt, wird der Weg eines möglicherweise auftretenden Kriechstromes verlängert und hierdurch die elektrische Isolation zwischen der Kontaktschiene 4 und der Kühlplatte 2 verbessert.

Durch den hier vorgeschlagenen Ansatz lasst sich also die Kriechstrecke von der Ableiterschiene 4 zur Kuhlplatte 2 deutlich verlängern und somit das elektrische Isolatiorisverhalten der Isolationsvorrichtung verbessern. Bei der Wärmeleitfolie 3 als Verbindungselement handelt es sich vorliegend beispielsweise um eine mit Bornitrid oder Aluminiumoxid gefüllte Masse aus Polyetherpolyurethan oder Silikon. Alternativ kann eine Wärmeleitfolie 3 mit zusätzlichen Isolationselementen (Kunststoffbuchsen, Silikon-/PU- Rundelemente/ -scheiben) versehen werden oder aus einem zwei-teiligen (z.B. laminierten) Aufbau bestehen, der in die Durchgangsbohrung der Kühlplatte 2 ragt

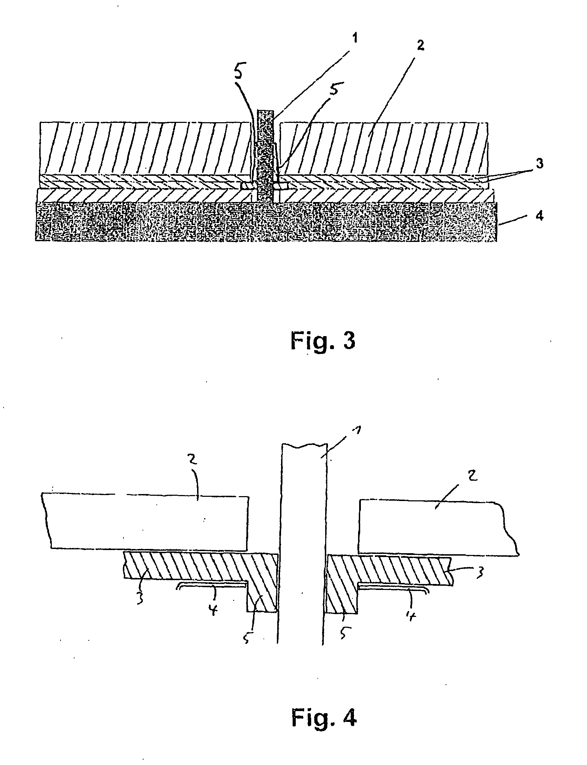

Ein zwei- oder mehrteiliger Aufbau der beispielhaft verwendeten Wärmeleitfolie 3 kann außerdem verschiedene Durchmesser der Durchführungsbohrungen (Öffnungen) in den einzelnen Schichten (d.h. Folienlagen) aufweisen. Somit ist es möglich, die vorstehend genannten Isolationselemente so zwischen Kontaktschiene 4 und Kühlplatte 2 in die Wärmeleitfolie einzubringen, dass alle Kanten der Kontaktschiene 4 abgedeckt sind und trotzdem keine Dickenunterschiede entstehen. Dadurch ist eine gleichmäßige Anlage der Wärmeleitfolie 3 an die Kühlplatte 2 sichergestellt, wie dies aus der Fig 3 ersichtlich wird.

Alternativ können auch die Kante(n) der Ableiterschiene 4 durch einen Teilbereich 5 des Verbindungselementes 3 umschlossen werden, wie dies in Fig. 4 beispielshafl dargestellt ist. Hierbei ragt der Teilbereich 5 des Verbindungselementes 3 nicht mehr in den (ersten) Zwischenraum zwischen einer Wand der Öffnung der Kuhlplatte 2 und dem Schaft 1, sondern in einen (zweiten) Zwischenraum zwischen der Kontaktschiene 4 und dem Schaft 1. Auch eine solche Anordnung des Teilbereiches 5 des Verbindungselementes 3 bewirkt eine Verlängerung eines Weges von einem möglicherweise auftretenden Kriechstrom zwischen der Kontaktschiene 4 und der Kuhlplatte 2

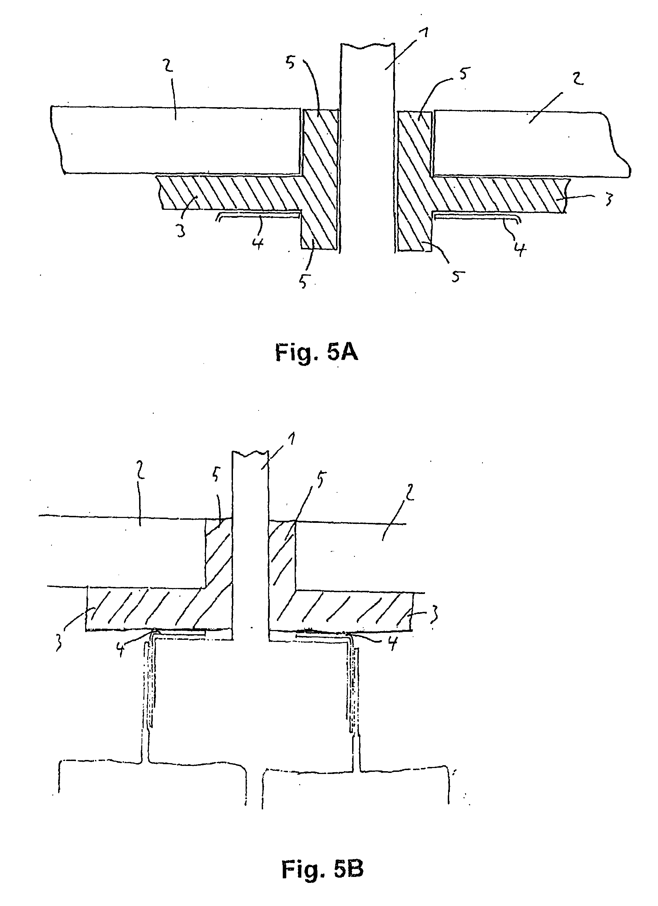

Auch kann durch eine Kombination der Ausführungsbeispiele gemaß den Figuren 2 und 4 ein weiteres Ausführungsbeispiel der Erfindung erhalten werden, wie es in der Fig. 5A dargestellt ist. In einem solchen Ausführungsbeispiel werden beide Kanten, d h die Kante(n) der Öffnung in der Kühiplatte 2 und die Kante(n) der Kontaktschiene 4 durch den Teilbereich 5 des Verbindungselementes 3 umschlossen oder umgeben Ein möglicherweise auftretender Kriechstrom zwischen der Kühlplatte 2 und der Kontaktschiene 4 müsste dann einen noch weiteren Weg zurücklegen, wodurch sich eine weitere Verbesserung des elektrischen Isolationsverhaltens einer derart ausgestalteten Insolationsvorrichtung ergeben würde.

Die Strecke des Umschlusses, d.h die Tiefe, die der Teilbereich 5 des Verbindungselementes 3 in eine Zwischenraum zwischen einer Wand der Öffnung in der Kühlplatte 2 und dem Schaft 1 oder in einen Zwischenraum zwischen der Kante der Kontaktschiene 4 und dem Schaft 1 hineinragt, kann variiert werden, wodurch auch eine unterschiedlich große elektrische Isolation zwischen der Kontaktschiene 4 und der Kuhlplatte 2 erreicht werden kann, Dies ermöglicht eine Einstellbarkeit des Isolationsverhaltens, abhängig von einer Tiefe, die der Teilbereich 5 in die entsprechenden Zwischenräume hineinragt Andere Ausführungsformen, die allerdings zu einem bauraumintensiveren Packaging führen wurden, könnten in Durchführungen in Schiene und Kühlblech gesehen werden, die jedoch entsprechend groß auszuführen wären, um die Mindestkriech- und Luftabstandstrecken einzuhalten.

Fig. 5B zeigt einen thermischen Anschluss von elektrochemischen Energiespeicherzellen an die Kontaktschienen 4. Die elektrochemischen Energiespeicherzellen sind dabei in der Fig 5B unten dargestellt und mit den Ableitern an die Kontaktschienen 4 angeschlossen

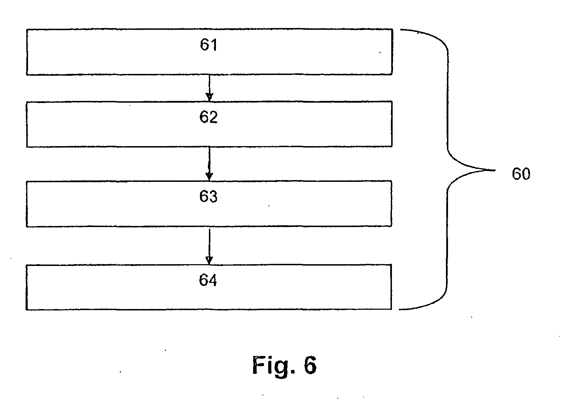

Fig. 6 zeigt ein Ablaufdiagramm eines Ausführungsbeispiels der vorliegenden Erfindung als Verfahren 60 zur Herstellung einer Isolationsvorrichtung für eine elektrochemische Energiespeichereinheit. Das Verfahren umfasst einen Schritt des Bereitstellens 61 einer Kühlplatte, die zur thermischen Kontaktierung mit der elektrochemischen Energiespeichereinheit ausgebildet ist, wobei die Kuhlplatte zumindest eine Öffnung aufweist. Weiterhin umfasst das Verfahren 60 einen Schritt des Bereitstellens 62 einer Kontaktschiene, die zur Ableitung von Warme ausgebildet ist. Auch umfasst das Verfahren einen Schritt des Anordnens 63 eines Verbindungselementes mit einer Oberfläche, die ein elektrisch isolierendes Material aufweist, wobei das Verbindungselement zwischen einer Hauptfläche der Kühlplatte und einer Fläche der Kontaktschiene derart angeordnet wird, dass ein Teilbereich des Verbindungselementes in die Öffnung der Kühlplatte ragt und/oder eine Kante der Kontaktschiene seitlich abdeckt Schließlich weist das Verfahren 60 einen Schritt des Anbringens 64 eines Halteelementes zur Fixierung einer Anordnung zwischen der Kühlplatte und der Kontaktschiene auf, wobei das Halteelement einen Schaft aufweist, der beim Anbringen durch die Öffnung der Kühlplatte gesteckt wird, so dass der Teilbereich des Verbindungselementes zwischen dem Schaft und einer Wand der Öffnung und/oder zwischen der Kante der Kontaktschiene, und dem Schaft angeordnet wird.

Ferner kann auch die Kuhlplatte wird mit einer noch flüssigen Gründmasse einer Wärmeleitfolie (z B. keramisch gefüllte Silikon-Vergußmasse) beschichtet werden Die fertig beschichtete Platte wird dann zur Aushärtung der Masse in den Ofen geschoben Dies spart den Arbeitsschritt, dass die Folie zuerst in einer Form gegossen, ausgehärtet und dann auf die Platte aufgeklebt werden muss

## Patentansprüche

1. Isolationsvorrichtung für eine elektrochemische Energiespeichereinheit, wobei die Isolationseinheit folgende Merkmale aufweist:
- eine Kühlplatte (2), die zur thermischen Kontaktierung mit der elektrochemischen Energiespeiehereinheit ausgebildet ist, wobei die Kühlplatte (2) zumindest eine Öffnung aufweist;
- eine KontaKtschiene (4), die zur Ableitung von Warme auggebildet ist; Fixierung
- einem Halteelement zur Fixierung einer Anordnung zwischen der Kühlplatte (2) und der Kontaktschiene (4), wobei das Halteelement einen Schaft (1) aufweist, der sich durch die Öffnung der Kühlplatte (2) erstreckt und wobei durch einen Abstand zwischen einer Wand der Öffnung und dem Schaft (1) ein erster Zwischenraum definiert ist und/oder durch einen Abstand zwischen einer Kante der Kontaktschiene (4) und dem Schaft (1) ein zweiter Zwischenraum definiert ist; und
- ein Verbindungselement (3) mit einer Oberfläche, die ein elektrisch isolierendes Material aufweist, wobei das Verbindungselement zwischen einer Hauptoberfläche der Kühlplatte (2) und einer Fläche der Kontaktschiene (4) angeordnet ist und ferner einen Teilbereich (5) aufweist, der in den ersten und/oder den zweiten Zwischenraum hineinragt.

2. Isolationsvorrichtung gemäß Anspruch 1, **dadurch gekennzeichnet, dass** das Verbindungselement (3) ausgebildet ist, um im Zusammenwirken mit dem Schaft (1) die Öffnung der Kühlplalte (2) bündig zu verschließen.

3. Isolationsvorrichtung gemäß einem der vorangegangenen Ansprüche **dadurch gekennzeichnet, dass** das Verbindungselement (3) durch eine Wärmeleitfolie und/oder ein Silikonformteil gebildet ist

4. Isolationsvorrichtung gemäß einem der vorangegangenen Ansprüche, **dadurch gekennzeichnet, dass** das Verbindungselement (3) eine mit Bornitrid oder-Aluminiumoxid gefülltes Element aus Polyetherpolyurethan oder Silikon enthält

5. Isolationsvorrichtung gemäß einem der vorangegangenen Ansprüche, **dadurch gekennzeichnet, dass** das Verbindungselement (3) eine Wärmeleitfölie und zumindest ein in die Wärmeleitfolie eingestecktes Isolationselement (5) aufweist, das in den ersten und/oder zweiten Zwischenraum hineinragt, wobei das Isolationselement (5) durch eine kunststoffbuchse, ein Silikon- oder Polyetherpolyurethan-Rundelement oder eine Silikon- oder Polyetherpolyurethan-Rundscheibe gebildet ist.

6. Isolationsvorrichtung gemäß Anspruch 5, **dadurch gekennzeichnet, dass** das isolationselement (5) einen Isolationsshaft aufweist, der sich entlang des Schaftes (1) erstreckt, Wobei der Isolationsschaft eine Form aufweist, die sich ausgebend von einer Hauptoberfläche der Kühlplatte (2) mit zunehmender Tiefe in die Öffnung der kühlplatte (2) verjüngt.

7. Isolationsvorrichtung gemäß einem der vorangegangenen Ansprüche, **dadurch gekennzeichnet, dass** das Verbindungselement (3) eine laminierte Wärmeleitfolie umfasst, die zumindest zwei unterschiedliche Folienlagen aufweist, wobei zumindest eine der Folienlagen in den ersten und/oder zweiten Zwischenraum hineinragt.

8. Isolationsvorrichtung gemäß Anspruch 7, **dadurch gekennzeichnet, dass** eine erste Folienlage eine Folienöffnung mit einem ersten Durchmesser und eine zweite Folienlagen eine Folienöffnung mit einem vom ersten Durchmesser unterschiedlichen zweiten Durchmesser aufweist, wobei der Schaft (1) sich durch die erste und zweite Folienöffnung erstreckt.

9. Isolationsvorrichtung gemäß Anspruch 5, **dadurch gekennzeichnet, dass** das das Verbindungselement (3) eine laminierte Wärmeleitfolie umfasst, die zumindest zwei unterschiedliche Folienlagen aufweist, wobei eine erste der beiden Folienlagen eine erste Öffnung mit einem kleineren Durchmesser aufweist und die zweite der beiden Folienlagen eine Öffnung mit einem größeren Durchmesser aufweist, und wobei das Isolationselement (5) durch die erste und zweite Folienöffnung durchgesteckt ist und ein Isolationselementkopf die größere Foilenöffnung ausfüllt und bündig mit einer Hauptoberfläche der Wärmeleitfolie (3) abschließt.

10. Isolationselement gemäß einem der vorangegangenen Ansprüche, **dadurch gekennzeichnet, dass** die Kontaktschiene (4) zumindest eine Öffnung aufweist, durch die der Schaft (1) des Halteelementes ragt, wobei die eine Kante der Kontaktschiene (4), durch die der zweite Zwischenraum gebildet ist, eine Kante der Öffnung der Kontaktschiene (4) darstellt.

11. Verfahren (60) zur Herstellung einer Isolationsvorrichtung für eine elektrochemische Energiespeichereinheit, wobei das Verfahren (60) die folgenden Schritte umfasst.
- Bereitstellen (61) einer Kühlplatte (2), die zur thermischen Kontaktierung mit der elektrochemischen Energiespeichereinheit ausgebildet ist, wobei die Kühlplatte (2) zumindest eine Öffnung aufweist;
- Bereitstellen (62) einer Kontaktschiene (4), die zur Ableitung von Wärme ausgebildet ist,
- Anordnen (63) eines Verbindungselementes (3) mit einer Oberfläche, die ein elektrisch isolierendes Material aufweist, wobei das Verbindungselement (3) zwischen einer Hauptoberfläche der Kühlplatte (3) und einer Fläche der Kontaktschiene (4) derart angeordnet wird, dass ein Teilbereich (5) des Verbindungselementes (3) in die Öffnung der Kühlplatte (2) ragt und/oder eine Kante der Kontaktschiene (4) seitlich abdeckt; und
- Anbringen (64) eines Halteelementes zur Fixierung einer Anordnung zwischen der Kühlplatte (2) und der Kontaktschiene (4), wobei das Halteelement einem Schaft (1) aufweist, der beim Anbringen durch die Öffnung der Kühlplatte (2) gesteckt wird, so dass der Teilbereich (5) des Verbindungselements (3) zwischen dem Schaft (1) und einer Wand der Öffnung und/oder zwischen der Kante der Kontaktschiene (4) und dem Schaft (1) angeordnet wird.

12. Verfahren (60) gemäß Anspruch 11, **dadurch gekennzeichnet, dass** im Schritt des Bereitstellens (61) der Kühlplatte eine Hauptoberfläche der Kühlplatte (2) mit einem flüssigen Material beschichtet wird und ferner die mit dem flüssigen Material beschichtete Kühlplatte (2) erhitzt wird, um das Verbindungselement (3) herzustellen.

13. Verfahren (60) gemäß Anspruch 12, **dadurch gekennzeichnet, dass** im Schritt des Bereitstellens (61) der Kühlplatte eine Hauptoberfläche mit einer keramisch gefüllten Silikon-Vergussmasse beschichtet wird.

## Claims

1. An insulating device for an electrochemical energy storage unit, wherein the insulating unit has the following features:
- a cooling plate (2), designed for thermal contacting with the electrochemical energy storage unit, whereby the cooling plate (2) has at least one opening;
- a contact bar (4) designed for dissipating heat;
- a retaining element for fixing an arrangement between the cooling plate (2) and the contact bar (4), whereby the retaining element has a shaft (1) extending through the opening of the cooling plate (2) and whereby a first interspace is defined by a distance between a wall of the opening and the shaft (1) and/or a second interspace is defined by a distance between an edge of the contact bar (4) and the shaft (1); and
- a connecting element (3) having a surface, which has an electrically insulating material, whereby the connecting element is disposed between a main surface of the cooling plate (2) and a surface of the contact bar (4) and further has a partial region (5) projecting into the first and/or the second interspace.

2. The insulating device according to claim 1, **characterized in that** the connecting element (3) is designed to close off flush the opening of the cooling plate (2) in conjunction with the shaft (1).

3. The insulating device according to any one of the preceding claims, **characterized in that** the connecting element (3) is formed by a thermally conductive film and/or a silicone formed part.

4. The insulating device according to any one of the preceding claims, **characterized in that** the connecting element (3) contains an element filled with boron nitride or aluminum oxide and made of polyether polyurethane or silicone.

5. The insulating device according to any one of the preceding claims, **characterized in that** the connecting element (3) has a thermally conductive film and at least one insulating element (5) inserted into the thermally conductive film and projecting into the first and/or second interspace, whereby the insulating element (5) is formed by a plastic bushing, a silicone or polyether polyurethane round element, or a silicone or polyether polyurethane round disc.

6. The insulating device according to claim 5, **characterized in that** the insulating element (5) has an insulating shaft, which extends along the shaft (1), whereby the insulating shaft has a form, which tapers proceeding from a main surface of the cooling plate (2) with increasing depth into the opening of the cooling plate (2).

7. The insulating device according to any one of the preceding claims, **characterized in that** the connecting element (3) comprises a laminated thermally conductive film, which has at least two different film layers, whereby at least one of the film layers projects into the first and/or second interspace.

8. The insulating device according to claim 7, **characterized in that** a first film layer has a film opening with a first diameter and a second film layer a film opening with a second diameter different from the first diameter, whereby the shaft (1) extends through the first and second film opening.

9. The insulating device according to claim 5, **characterized in that** the connecting element (3) comprises a laminated thermally conductive film, which has at least two different film layers, whereby a first layer of the two film layers has a first opening with a smaller diameter and the second of the two film layers has an opening with a larger diameter, and whereby the insulating element (5) is pushed through the first and second film opening and an insulating element head fills the larger film opening and closes it flush with the main surface of the thermally conductive film (3).

10. The insulating element according to any one of the preceding claims, **characterized in that** the contact bar (4) has at least one opening, through which the shaft (1) of the retaining element projects, whereby the one edge of the contact bar (4), which forms the second interspace, represents an edge of the opening of the contact bar (4).

11. A method (60) for producing an insulating device for an electrochemical energy storage unit, wherein the method (60) comprises the following steps:
- providing (61) a cooling plate (2), designed for thermal contacting with the electrochemical energy storage unit, whereby the cooling plate (2) has at least one opening;
- providing (62) a contact bar (4) designed for dissipating heat;
- disposing (63) a connecting element (3) having a surface, which has an electrically insulating material, whereby the connecting element (3) is disposed between a main surface of the cooling plate (3) and a surface of the contact bar (4) in such a way that a partial region (5) of the connecting element (3) projects into the opening of the cooling plate (2) and/or covers an edge of the contact bar (4) laterally; and
- attaching (64) a retaining element for fixing an arrangement between the cooling plate (2) and the contact bar (4), whereby the retaining element has a shaft (1), which during the attachment is inserted through the opening of the cooling plate (2), so that the partial region (5) of the connecting element (3) is disposed between the shaft (1) and a wall of the opening and/or between the edge of the contact bar (4) and the shaft (1).

12. The method (60) according to claim 11, **characterized in that** in the step of providing (61) the cooling plate, a main surface of the cooling plate (2) is coated with a liquid material and further the cooling plate (2) coated with the liquid material is heated to produce the connecting element (3).

13. The method (60) according to claim 12, **characterized in that** in the step of providing (61) the cooling plate, a main surface is coated with a ceramic-filled silicone sealing compound.

## Revendications

1. Dispositif d'isolation pour un ensemble accumulateur d'énergie électrochimique, où l'ensemble d'isolation présente les caractéristiques suivantes et comprend:
- une plaque de refroidissement (2) qui est configurée pour servir à la mise en contact thermique avec l'ensemble accumulateur d'énergie électrochimique, où la plaque de refroidissement (2) présente au moins une ouverture;
- un rail de contact (4) qui est configuré pour servir à la dissipation de chaleur;
- un élément de retenue servant à la fixation d'un agencement formé entre la plaque de refroidissement (2) et le rail de contact (4), où l'élément de retenue présente une tige (1) qui s'étend à travers l'ouverture de la plaque de refroidissement (2) et où un premier espace intermédiaire est défini par un intervalle formé entre une paroi de l'ouverture et la tige (1) et/ou un second espace intermédiaire est défini par un intervalle formé entre un bord du rail de contact (4) et la tige (1); et
- un élément d'assemblage (3) comportant une surface qui présente un matériau électroisolant, où l'élément d'assemblage est disposé entre une surface principale de la plaque de refroidissement (2) et une surface du rail de contact (4), ledit élément d'assemblage présentant en outre une zone partielle (5) qui pénètre dans le premier et/ou dans le second espace intermédiaire.

2. Dispositif d'isolation conformément à la revendication 1, **caractérisé en ce que** l'élément d'assemblage (3) est configuré pour que l'ouverture de la plaque de refroidissement (2) soit obturée de manière affleurante, conjointement avec la tige (1).

3. Dispositif d'isolation conformément à l'une ou l'autre des revendications précédentes, **caractérisé en ce que** l'élément d'assemblage (3) est formé par une feuille conductrice de la chaleur et/ou par une pièce moulée en silicone.

4. Dispositif d'isolation conformément à l'une quelconque des revendications précédentes, **caractérisé en ce que** l'élément d'assemblage (3) contient un élément se composant de polyéther polyuréthane ou de silicone et rempli de nitrure de bore ou d'oxyde d'aluminium.

5. Dispositif d'isolation conformément à l'une quelconque des revendications précédentes, **caractérisé en ce que** l'élément d'assemblage (3) présente une feuille conductrice de la chaleur et au moins un élément d'isolation (5) introduit dans la feuille conductrice de la chaleur, élément d'isolation qui pénètre dans le premier et/ou dans le second espace intermédiaire, où l'élément d'isolation (5) est formé par une douille en matière plastique, par un élément rond en silicone ou en polyéther polyuréthane ou bien par une rondelle en silicone ou en polyéther polyuréthane.

6. Dispositif d'isolation conformément à la revendication 5, **caractérisé en ce que** l'élément d'isolation (5) présente une tige d'isolation qui s'étend le long de la tige (1), où la tige d'isolation présente une forme qui se rétrécit à partir d'une surface principale de la plaque de refroidissement (2), en ayant une profondeur croissante dans l'ouverture de la plaque de refroidissement (2).

7. Dispositif d'isolation conformément à l'une quelconque des revendications précédentes, **caractérisé en ce que** l'élément d'assemblage (3) comprend une feuille stratifiée conductrice de la chaleur qui présente au moins deux couches de feuille différentes, où au moins l'une des couches de la feuille pénètre dans le premier et/ou dans le second espace intermédiaire.

8. Dispositif d'isolation conformément à la revendication 7, **caractérisé en ce qu'**une première couche de la feuille présente une ouverture de feuille ayant un premier diamètre, une seconde couche de la feuille présentant une ouverture de feuille ayant un second diamètre différent du premier diamètre, où la tige (1) s'étend à travers la première et la seconde ouverture de la feuille.

9. Dispositif d'isolation conformément à la revendication 5, **caractérisé en ce que** l'élément d'assemblage (3) comprend une feuille stratifiée conductrice de la chaleur qui présente au moins deux couches de feuille différentes, où une première des deux couches de la feuille présente une première ouverture ayant un plus petit diamètre, la seconde des deux couches de la feuille présentant une ouverture ayant un plus grand diamètre, et où l'élément d'isolation (5) est traversé par la première et par la seconde ouverture de la feuille, et une tête d'élément d'isolation remplit la plus grande ouverture de la feuille et l'obture en étant à fleur par rapport à une surface principale de la feuille conductrice de la chaleur (3).

10. Elément d'isolation conformément à l'une quelconque des revendications précédentes, **caractérisé en ce que** le rail de contact (4) présente au moins une ouverture par laquelle passe la tige (1) de l'élément de retenue, où l'un des bords du rail de contact (4), par lequel est formé le second espace intermédiaire, représente un bord de l'ouverture du rail de contact (4).

11. Procédé (60) de fabrication d'un dispositif d'isolation pour un ensemble accumulateur d'énergie électrochimique, où le procédé (60) comprend les étapes suivantes qui sont:
- la fourniture (61) d'une plaque de refroidissement (2) qui est configurée pour servir à la mise en contact thermique avec l'ensemble accumulateur d'énergie électrochimique, où la plaque de refroidissement (2) présente au moins une ouverture;
- la fourniture (62) d'un rail de contact (4) qui est configuré pour servir à la dissipation de chaleur;
- l'agencement (63) d'un élément d'assemblage (3) ayant une surface qui présente un matériau électroisolant, où l'élément d'assemblage (3) est disposé entre une surface principale de la plaque de refroidissement (3) et une surface du rail de contact (4), de manière telle qu'une zone partielle (5) de l'élément d'assemblage (3) pénètre dans l'ouverture de la plaque de refroidissement (2) et/ou recouvre latéralement un bord du rail de contact (4); et
- la mise en place (64) d'un élément de retenue servant à la fixation d'un agencement prévu entre la plaque de refroidissement (2) et le rail de contact (4), où l'élément de retenue présente une tige (1) qui, lors de la mise en place, est introduite dans l'ouverture de la plaque de refroidissement (2), de sorte que la zone partielle (5) de l'élément d'assemblage (3) est disposée entre la tige (1) et une paroi de l'ouverture et/ou entre le bord du rail de contact (4) et la tige (1).

12. Procédé (60) conformément à la revendication 11, **caractérisé en ce que**, au cours de l'étape comprenant la fourniture (61) de la plaque de refroidissement, une surface principale de la plaque de refroidissement (2) est enduite d'un matériau liquide, et la plaque de refroidissement (2) enduite du matériau liquide est en outre chauffée, pour fabriquer l'élément d'assemblage (3).

13. Procédé (60) conformément à la revendication 12, **caractérisé en ce que**, au cours de l'étape comprenant la fourniture (61) de la plaque de refroidissement, une surface principale est enrobée d'une masse de scellement au silicone avec charge céramique.
